# FASCICULE DE BREVET EUROPEEN

(11) **EP 3 463 672 B1**
(45) Date de publication et mention de la délivrance du brevet: **18.06.2025**
(21) Numéro de dépôt: 17732974.5
(22) Date de dépôt: 24.05.2017
(51) Int. Cl.: B02C 18/24, B02C 19/00

(54) **DISPOSITIF D'ETANCHEITE POUR AUTOMATE DE BANALISATION DE DECHETS**
DICHTUNGSVORRICHTUNG FÜR EINE ABFALLVERARBEITUNGSMASCHINE
SEALING DEVICE FOR A WASTE PROCESSING MACHINE

(30) Priorité: 26.05.2016 FR 1654741
(43) Date de publication de la demande: 10.04.2019
(73) Titulaire: Bertin Technologies, 78180 Montigny-le-Bretonneux (FR)
(72) Inventeur: BESNARD, Jacques, 78370 Plaisir (FR); ROCH, Jean, 13109 Simiane Collongue (FR); LORECKI, Boguslaw, 13850 Greasque (FR)
(74) Mandataire: Hautier IP
(86) Numéro de dépôt international: PCT/FR2017/051289
(87) Numéro de publication internationale: WO 2017/203172

(56) Documents cités:
- EP-A1- 1 520 592
- WO-A1-2012/066530
- WO-A1-92/20450
- GB-A- 1 086 650

## Description

La présente invention se rapporte notamment à un dispositif d'étanchéité destiné en particulier à réaliser l'étanchéité du fond d'une cuve d'un automate de traitement de déchets tel que la banalisation de déchets d'activités de soins à risques infectieux (appelés DASRI). L'invention concerne également un tel automate.

Les déchets du type DASRI sont générés par les centres de soins tels que les hôpitaux, les cliniques, etc. Ils comprennent notamment les matériels et matériaux de soins piquants, coupants et/ou tranchants, les produits sanguins à usage thérapeutique, les déchets anatomiques humains, les déchets issus des activités d'enseignement, de recherche et de production industrielle dans les domaines de la médecine humaine et vétérinaire, etc. (Art. R1335-1 du Code de la Santé Publique de la République Française).

Ces déchets présentent un risque infectieux du fait qu'ils peuvent contenir des micro-organismes. Ils suivent donc des filières d'élimination spécifiques, étroitement encadrées par la législation française.

Un système de banalisation de déchets du type DASRI doit être capable d'une part de transformer les déchets pour les rendre méconnaissable (en particulier pour empêcher de reconnaître leur provenance ou origine) et d'autre part de les désinfecter, c'est-à-dire de réduire leur population bactérienne et virale d'un facteur au moins égal à 5 log10.

De nombreux systèmes de banalisation existent, ces systèmes intégrant une fonction de broyage associée à une fonction de chauffage des déchets, en vue de leur désinfection. On citera par exemple le document GB 1086650A qui décrit un système de banalisation.

La déposante a déjà proposé dans sa demande WO2013/110900 un automate de traitement de déchets. Cet automate est apte à réaliser un broyage et un chauffage des déchets pour leur désinfection, les moyens de chauffage comprenant un générateur à micro-ondes relié à la cuve. Le broyage est réalisé par une lame rotative à l'intérieur de la cuve, cette lame étant portée par un arbre qui traverse une paroi de fond de la cuve et qui est guidé en rotation par des paliers de roulement.

Si ce dispositif s'avère particulièrement efficace, un point particulier de fonctionnement a attiré l'attention de la demanderesse et concerne l'étanchéité du fond de cuve. En effet, il est crucial que l'étanchéité du fond de cuve soit toujours garantie afin d'éviter que les déchets qui sont abrasifs, coupants et corrosifs ne s'infiltrent dans le mécanisme d'entrainement en rotation, au niveau des interfaces entre les parties fixes et rotatives.

Le document précité WO2013/110900 décrit également une cuve comprenant une paroi latérale cylindrique pourvue d'une ouverture d'évacuation des effluents gazeux. Toutefois, en fonctionnement, les déchets peuvent obstruer tout ou partie de cette ouverture empêchant l'évacuation des effluents.

La présente invention a notamment pour but de fournir une solution technologique aux problèmes précités.

A cette fin, l'invention propose un dispositif d'étanchéité, en particulier pour automate de traitement de déchets biologiques, comprenant une cuve dont une paroi de fond est traversée par un arbre portant en rotation, à l'intérieur de la cuve une pièce annulaire comportant au moins une première gorge annulaire débouchant vers la paroi de fond et logeant un premier joint annulaire ou organe annulaire d'étanchéité en appui en direction axiale sur un élément annulaire solidaire de la paroi de fond et radialement vers l'extérieur sur une face annulaire latérale radialement externe de ladite gorge annulaire.

Selon l'invention, le double appui du joint annulaire ou organe annulaire d'étanchéité sur l'élément annulaire de stator solidaire de la paroi de fond de la cuve et sur la face annulaire latérale radialement externe de ladite gorge permet de limiter la circulation de déchets liquides entre la pièce annulaire et l'élément de stator. Les déchets sont ainsi empêchés de circuler vers des éléments tels que les paliers de roulements. Le fonctionnement d'un automate de traitement des déchets intégrant un tel dispositif d'étanchéité peut dès lors être grandement amélioré.

Selon une autre caractéristique de l'invention, des moyens d'appui élastiques sont intercalés axialement entre une paroi annulaire de fond de ladite gorge annulaire et ledit joint annulaire. En fonctionnement, le frottement du joint annulaire sur l'élément annulaire conduit à une usure de celui-ci qui est compensée par les moyens d'appui élastique. Il est à noter que la face du joint annulaire en contact avec la face annulaire latérale radialement externe de la gorge n'est pas sujette à une usure du fait que le joint est solidaire en rotation de la pièce annulaire.

Selon encore une autre caractéristique de l'invention, une cale annulaire est intercalée axialement entre les moyens d'appui élastique et le joint annulaire.

Dans une réalisation particulière de l'invention, la cale annulaire a une section en L dont une branche est intercalée entre une face latérale annulaire radialement interne de ladite gorge annulaire et ledit joint annulaire.

Avantageusement, la face annulaire radialement externe de la première gorge se prolonge axialement vers la paroi de fond jusqu'à être agencée en vis-à-vis radial d'une première surface cylindrique de l'élément annulaire. Cet agencement permet de compliquer encore davantage la circulation des déchets lesquels doivent, pour pénétrer, alors circuler radialement vers le haut entre la première surface cylindrique de l'élément annulaire et la partie de la face latérale radialement externe de la première gorge annulaire.

Selon une autre définition possible, la pièce annulaire comprend une paroi annulaire radialement externe délimitant extérieurement la première gorge annulaire et s'étendant vers la paroi de fond jusque dans un premier renfoncement annulaire en L de l'élément annulaire.

En cas de défaillance de l'un des éléments constitutifs du dispositif d'étanchéité tel que décrit précédemment, il peut être intéressant d'intégrer à la pièce annulaire une seconde gorge annulaire formée radialement à l'intérieur de ladite première gorge annulaire, cette seconde gorge logeant, de manière similaire à ce qui a été décrit en référence à la première gorge, un second joint annulaire en appui en direction axiale sur l'élément annulaire solidaire de la paroi de fond et radialement vers l'extérieur sur une face annulaire latérale radialement externe de ladite seconde gorge annulaire.

Préférentiellement, la face annulaire latérale radialement externe de la seconde gorge se prolonge axialement vers la paroi de fond jusqu'à être agencée en vis-à-vis radial d'une seconde surface cylindrique de l'élément annulaire.

Dans une configuration préférée de l'invention, la première surface cylindrique et la seconde surface cylindrique de l'élément annulaire sont reliées l'une à l'autre par une surface annulaire radiale d'appui du premier joint annulaire, ce qui permet de former une configuration étagée le long de l'arbre.

Selon une autre définition possible, la pièce annulaire comprend une paroi annulaire séparant la première gorge annulaire et la seconde gorge annulaire et s'étendant vers la paroi de fond jusque dans un second renfoncement annulaire en L de l'élément annulaire.

Le premier renfoncement en L et le second renfoncement en L sont de préférence agencés l'un à la suite de l'autre en direction radiale et axiale de manière à former un agencement en marche d'escalier qui permet de limiter les introductions de déchets liquide.

Selon une autre caractéristique de l'invention, ledit premier joint annulaire ou organe annulaire d'étanchéité comprend une première partie annulaire réalisée dans un premier matériau et une pluralité de secondes parties formées par des joints toriques logés dans des rainures de la première partie, le premier matériau étant adapté à réaliser une étanchéité dynamique entre l'élément annulaire et le premier joint annulaire et le second matériau étant adapté à réaliser une étanchéité statique entre l'élément annulaire et le premier joint annulaire.

Cette configuration permet de garantir une étanchéité en fonctionnement et à l'arrêt c'est à dire lorsque l'arbre n'est pas entrainé en rotation. Le second joint annulaire pourrait également être formé en plusieurs parties comme décrit au paragraphe précédent.

Selon une autre caractéristique de l'invention, la ou les gorges annulaires sont à section en U comprenant des faces latérales sensiblement cylindriques et perpendiculaires à une face annulaire de fond sensiblement radiale, le joint étant à section rectangulaire, de préférence carrée.

Préférentiellement, ledit joint annulaire est réalisé dans un matériau polymère durci apte à résister thermiquement à des températures de l'ordre de 300°C, dues essentiellement aux frictions de l'arbre en rotation induisant une forte dissipation de chaleur et mécaniquement à des vitesses de rotation de l'ordre de 1500 tours par minute.

L'élément annulaire est, de préférence, structurellement indépendant de la paroi de fond et est appliqué à étanchéité sur la face interne de la paroi de fond, c'est-à-dire la face agencée à l'intérieur de la cuve.

Le dispositif selon l'invention peut, bien entendu, comprendre des moyens de broyage des déchets portés par l'arbre et montés à l'opposé de la paroi de fond par rapport à la pièce annulaire.

L'invention concerne également un premier type d'automate de traitement de déchets, en particulier de banalisation de déchets d'activités de soins à risques infectieux, comprenant au moins un dispositif d'étanchéité tel que décrit précédemment.

L'invention concerne encore un second type d'automate de traitement de déchets, en particulier de banalisation de déchets d'activités de soins à risque infectieux, comprenant une cuve destinée à être alimentée en déchets, un couvercle monté à déplacement à l'extrémité supérieure de la cuve entre une position d'ouverture et une position de fermeture étanche de la cuve, des moyens de chauffage de déchets en vue de leur désinfection comportant au moins un générateur de micro-ondes dont la sortie est reliée à une extrémité d'un guide d'onde dont l'autre extrémité débouche dans la cuve, dans lequel le couvercle porte un conduit d'évacuation des effluents gazeux et est en communication fluidique, en position de fermeture du couvercle, avec l'intérieur de la cuve au travers du couvercle, ce conduit comportant des moyens de piégeage des ondes électromagnétiques pour éviter les fuites d'ondes dans le conduit.

Selon la conception de ce second type d'automate, l'évacuation des effluents gazeux est facilitée du fait de leur circulation au travers du couvercle et non plus au travers de la paroi latérale de la cuve comme dans la technique antérieure. En outre, les fuites d'ondes sont empêchées au niveau du conduit.

Préférentiellement, dans le second type d'automate, les moyens de piégeage comprennent une portion d'extrémité du conduit sensiblement cylindrique reliée à la cuve et dont le diamètre interne et la longueur sont déterminées de manière à réaliser un piège du mode fondamental du générateur de micro-ondes. Le piège à micro-ondes est réalisé de manière simple par détermination d'une forme adéquate à une portion du conduit en communication fluidique avec la cuve.

Selon une autre caractéristique de ce second type d'automate, ladite portion d'extrémité est reliée par une portion coudée à une autre portion de conduit reliée à des moyens d'aspiration.

Le conduit peut être porté par un support solidaire du couvercle et être relié en aval à un conduit souple de raccordement aux moyens d'aspiration.

Dans une réalisation pratique du couvercle du second type d'automate, le couvercle comprend une paroi inférieure et une paroi supérieure définissant entre elles une cavité reliant l'intérieur de la cuve au conduit.

Préférentiellement, la paroi inférieure porte une armature comprenant au moins une rangée annulaire d'ouvertures communiquant avec la cavité, ladite rangée annulaire d'ouvertures étant centrée sur l'axe du couvercle. Chaque ouverture peut également loger une grille de blocage des déchets solides.

L'armature peut encore comprendre une seconde rangée annulaire d'ouvertures entourant la première rangée annulaires d'ouvertures.

Le générateur de micro-ondes est de préférence un magnétron qui fonctionne à une fréquence comprise entre 1 et 3 GHz, et par exemple de 2,45 GHz environ.

Le second type d'automate peut comprendre de manière optionnelle :
- un dispositif d'étanchéité tel que décrit précédemment et/ou
- des moyens de broyage des déchets portés par une paroi inférieure de fond de la cuve.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique en perspective de l'automate de traitement de déchets selon l'invention ;
- les figures 2 et 3 sont des vues schématiques partielles de l'automate de la figure 1, vu de dessus et en coupe axiale, respectivement ;
- la figure 4 est une autre vue schématique en perspective de l'automate de la figure 1 ;
- la figure 5A est une vue schématique, selon un plan de coupe contenant l'axe de rotation des moyens de broyage, du dispositif d'étanchéité selon l'invention intégré à l'automate de la figure 1 ;
- la figure 5B est une vue à plus grande échelle de la zone délimitée en pointillés sur la figure 5A ;
- la figure 5C est une vue isolée d'un joint annulaire du dispositif d'étanchéité selon l'invention ;
- les figures 6 et 7 sont des vues schématiques en perspective, vu de dessous et de dessus, d'un couvercle de fermeture étanche de la cuve de l'automate de la figure 1 ;
- la figure 8 est une vue schématique en perspective et en coupe du couvercle des figures 6 et 7 ;
- les figures 9 et 10 sont des vues schématiques en perspective d'un module à double hublot monté formant un guide d'onde relié, dans une réalisation, à l'entrée de la cuve de l'automate de la figure 1.

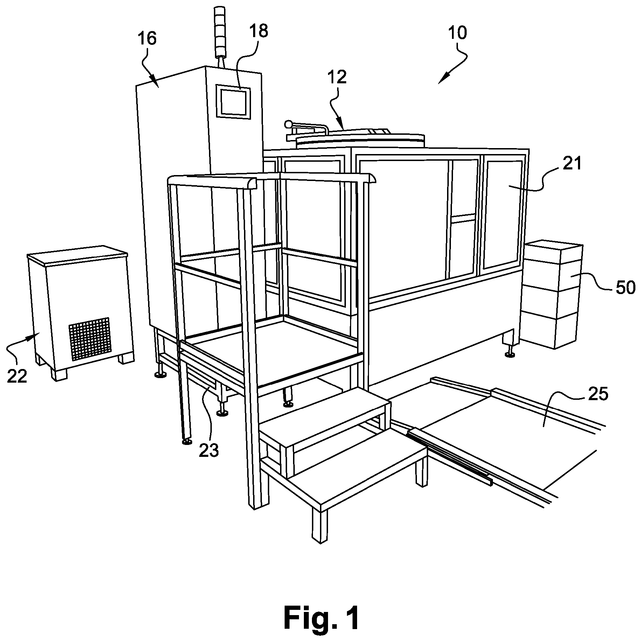

On se réfère tout d'abord aux figures 1 à 4 qui représentent un exemple de réalisation de l'automate 10 de traitement de déchets selon l'invention, cet automate étant particulièrement mais non exclusivement destiné à la banalisation de déchets d'activités de soins à risques infectieux (« DASRI »).

Dans l'exemple représenté, l'automate 10 comprend essentiellement trois éléments :
- une cuve 12 de traitement des déchets, dans laquelle les déchets sont destinés à être broyés et chauffés en vue de leur traitement, ces déchets étant introduits dans la cuve avec leurs conditionnements qui sont également destinés à être broyés ;
- un générateur 14 de micro-ondes pour l'alimentation de la cuve 12 en micro-ondes destinées à chauffer les déchets en vue de leur désinfection ; et
- des moyens informatisés 16 de commande reliés à la cuve 12 et au générateur 14 pour leur commande ainsi que pour la saisie et l'enregistrement de données et la gestion du procédé de traitement des déchets.

Les moyens de commande 16 comprennent une armoire électrique qui comporte notamment un écran 18 d'affichage d'informations et de contrôle du procédé de traitement, ainsi que des moyens de saisie d'informations. De préférence, l'écran 18 est du type tactile et un opérateur peut saisir des informations et effectuer des requêtes directement par l'intermédiaire de cet écran 18. L'armoire électrique des moyens de commande 16 est directement posée au sol.

Le générateur 14 de micro-ondes est un magnétron qui fonctionne à une fréquence comprise entre 1 et 3 GHz. Dans un mode particulier de réalisation de l'invention, le magnétron présente les caractéristiques suivantes : fréquence de 2450MHz, puissance de 3kW en multi-mode.

Dans une première réalisation, le magnétron 14 est relié à la cuve 12 par un guide d'onde 20 qui assure un couplage de puissance entre le magnétron 14 et la cuve 12. Dans l'exemple représenté, le guide d'onde 20 comprend une partie d'extrémité reliée à la cuve 12 qui est plus souple ou plus flexible que le reste du guide d'onde. Cette partie de plus grande souplesse ou flexibilité peut être formée par une portion de guide d'onde à parois métalliques ondulées. La surface extérieure de cette portion peut être ou non revêtue de différents matériaux de protection pour convenir à la plupart des exigences en termes de vibrations.

En fonctionnement, le magnétron 14 peut être alimenté en eau en vue de son refroidissement. Dans l'exemple représenté, l'automate 10 comprend un refroidisseur 22 à eau (figure 1) dont une entrée est reliée à une extrémité d'un circuit d'eau du magnétron et une sortie est reliée à une autre extrémité de ce circuit d'eau. Le magnétron 14 peut être alimenté en eau à une pression de 3 bars et à un débit de 3L/min environ.

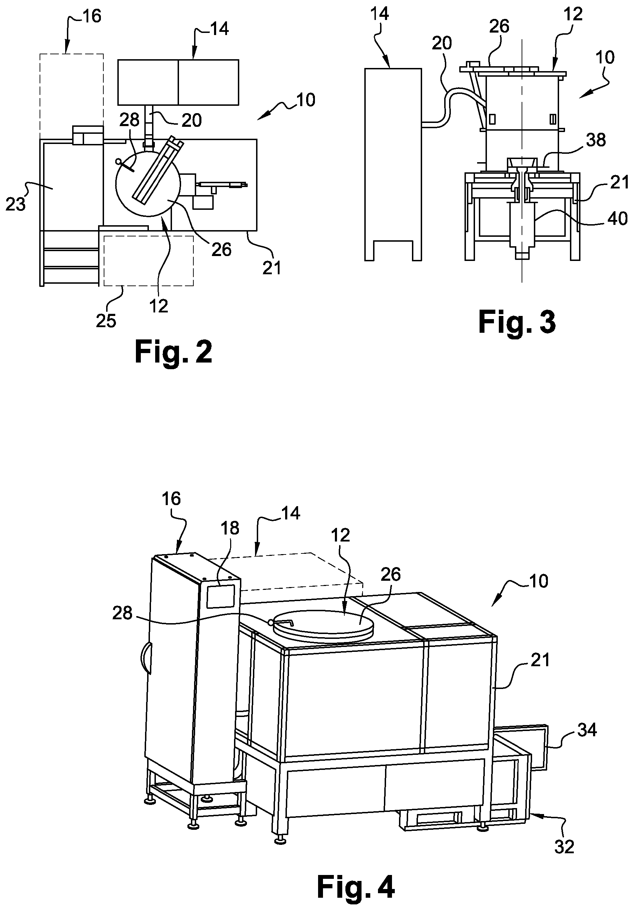

L'automate 10 comprend un châssis 21 de support de la cuve 10, ce châssis étant directement posé au sol et, dans une réalisation, indépendant des moyens de support du générateur 14 pour éviter, lors du broyage des déchets, la transmission de vibrations par le châssis jusqu'au magnétron. Dans l'exemple représenté, le châssis 21 a une forme parallélépipédique et est disposé en avant du générateur 14, qui est lui-même disposé à droite de l'armoire des moyens de commande 16 (figure 2).

Dans une variante non représentée, le générateur 14 est monté sur le châssis 21 par l'intermédiaire de moyens d'absorption de vibrations, tels que des blocs en élastomère ou des ressorts de compression.

Comme cela est visible aux figures 1 et 2, l'automate 12 peut en outre comprendre une estrade ou plate-forme 23 surélevée qui est accessible par un opérateur pour visualiser et contrôler l'écran d'affichage des moyens de commande 16 ainsi que la cuve 12. Cette plate-forme 23 est ici située en avant des moyens de commande 16 et à gauche du châssis 21 (figures 1 et 2). Un opérateur peut accéder à cette plate-forme 21 par des marches qui sont situées sur le devant de la plate-forme.

L'automate 10 peut en outre comprendre des moyens 25 de pesée des déchets avant et/ou après leur traitement (figures 1 et 2), ces moyens de pesée 25 étant par exemple du type à bascule. Ces moyens de pesée 25 sont situés en avant du châssis 21 et à droite des marches d'accès à la plate-forme 23.

La paroi latérale de la cuve 12 de l'automate 10 est en acier et a une forme générale cylindrique d'axe longitudinal vertical. La cuve a un volume de 440L dans l'exemple représenté. Ce volume est notamment fonction de la quantité de déchets à traiter et du volume maximal des emballages dans lesquels sont conditionnés les déchets lors de leur introduction dans la cuve.

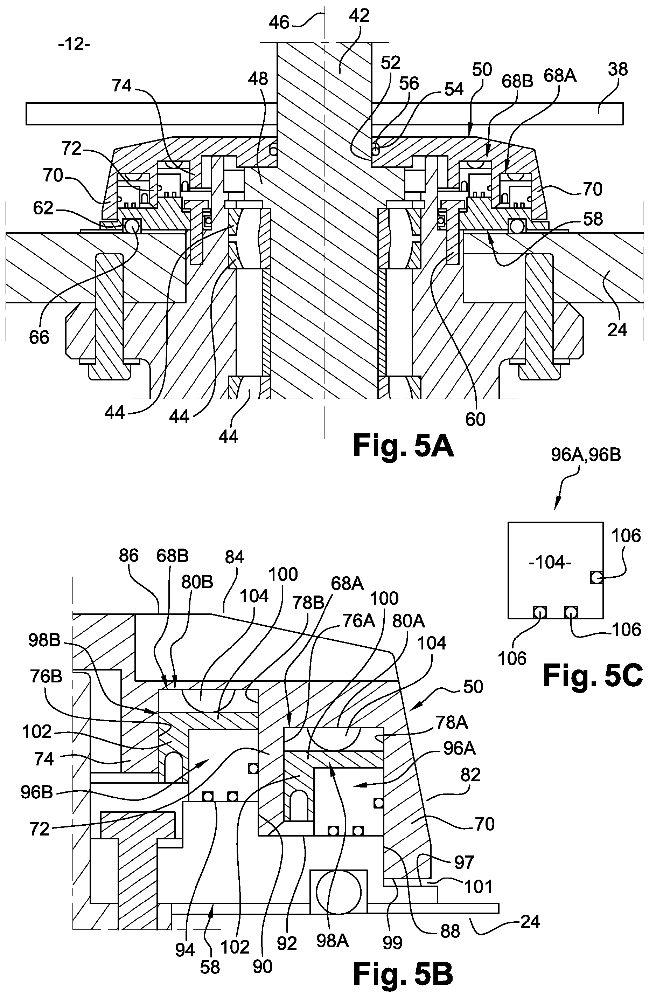

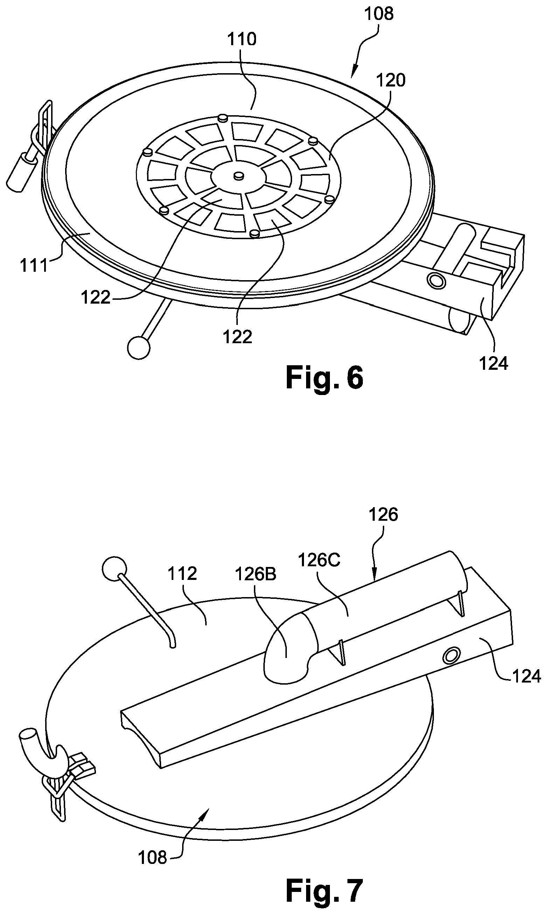

La cuve 12 est fermée à son extrémité inférieure par un fond 24 (figure 5A) et à son extrémité supérieure par un couvercle 26 (figures 6 à 8). Ce couvercle 26 est monté pivotant à l'extrémité supérieure de la cuve entre une position de fermeture de la cuve (représenté en figure 4) et une position d'ouverture de celle-ci (non représentée). La structure du couvercle sera décrite plus en détail en référence aux figures 6 à 8.

Le déplacement du couvercle 26 entre ces positions peut être réalisé manuellement ou par l'intermédiaire d'un moteur ou d'un vérin commandé par les moyens de commande 16 de l'automate 10. Dans le cas où l'automate 10 comprend un ou des vérins pneumatiques, ces vérins sont reliés à un système d'alimentation pneumatique qui délivre de préférence un débit d'air de l'ordre de 200L/min, à une pression de 6 bars environ.

La cuve 12 est en outre équipée de moyens 28 de verrouillage de son couvercle 26. Ces moyens de verrouillage 28 empêchent l'ouverture de la cuve, en particulier lorsqu'un cycle de traitement de déchets est en cours. Ces moyens de verrouillage 28 sont de préférence actionnés par les moyens de commande 16.

Le fond 24 de la cuve 10 peut comprendre une trappe (non représentée) de passage et d'évacuation des déchets après traitement, vers un bac 32 de récupération et de stockage des déchets, qui est logé sous la cuve (figure 4). Le passage des déchets de la cuve 12 au bac 32 peut être réalisé simplement par gravité. L'ouverture et la fermeture de la trappe sont contrôlées par les moyens de commande 16.

Comme cela est visible en figure 4, le bac 32 est logé dans un évidement inférieur du châssis 21, cet évidement étant fermé par une porte 34 pivotante qui peut être associée à des moyens de verrouillage commandés par les moyens 16.

Des moyens de broyage des déchets sont montés au fond de la cuve 12 (figure 5A) et comprennent une lame 38 montée rotative autour d'un axe vertical 42 aligné sur l'axe de la cuve 12 et entraînée en rotation autour de cet axe 42 par un moteur 40 porté par le châssis (figure 3).

La cuve 12 comprend une paroi de fond 24 sensiblement plane traversée par un arbre 42 relié à entrainement en rotation au moteur 40 et guidé en rotation par des paliers 44 de roulement. Dans la suite de la description, le terme « axial » fait référence à une direction s'étendant selon l'axe 46 de l'arbre 42 et le terme « radial » est à interpréter en relation avec la direction dans laquelle s'étend l'axe 46. L'arbre 42 comprend une nervure annulaire 48 agencée à l'intérieur de la cuve 12 et portant une pièce annulaire 50 qui comprend sur son bord cylindrique radialement interne une gorge annulaire 54 dans laquelle est engagé un joint annulaire 56 à section circulaire pour réaliser une jonction étanche entre la pièce annulaire 50 et l'arbre 42. La lame 38 de broyage est engagée sur l'arbre 42, au-dessus de la pièce annulaire 50, c'est-à-dire à l'opposé de la paroi de fond 24 par rapport à la pièce annulaire 50.

Comme cela est bien visible sur les figures 5A et 5B, un élément annulaire 58 de stator solidaire de la paroi de fond 24 est intercalé axialement entre la paroi de fond 24 et la pièce annulaire 50. Cet élément annulaire 58 est rendu solidaire de la paroi de fond 24 par des vis 60. Il comprend également une gorge annulaire 62 ouverte vers la paroi de fond 24, dans laquelle est engagé un joint annulaire 66 à section circulaire.

La pièce annulaire 50 comprend également une première gorge 68A annulaire externe et une seconde gorge 68B annulaire radialement interne lesquelles débouchent vers l'élément annulaire 58 de stator. La première gorge annulaire 68A est délimitée radialement par une paroi annulaire radialement externe 70 et une paroi annulaire intermédiaire 72. La seconde gorge annulaire 68B est délimitée radialement par la paroi annulaire intermédiaire 72 et une paroi annulaire radialement interne 74. Chacune des première gorge annulaire 68A et seconde 68B gorge annulaire comprend deux faces annulaires latérales radialement interne 76A, 76B et externe 78A, 78B formant les flancs des gorges 68A, 68B et reliées entre elles par une paroi annulaire de fond 80A, 80B. Les parois annulaires 76A, 78A, 76B, 78B forment des faces des parois annulaires interne 74, intermédiaire 72 et externe 70. Dans l'exemple de réalisation représentée aux figures 5A et 5B, chacune des première gorge 68A et seconde gorge 68B a une section en U et les deux faces latérales annulaires internes 76A, 76A et externes 78A, 78B sont sensiblement cylindriques, la paroi annulaire de fond 80A, 80B de chacune des première gorge 68A et seconde gorge 68B étant sensiblement radiale.

La paroi annulaire radialement externe 70 de la pièce annulaire 50 comprend une surface tronconique 82 externe à section diminuant en direction de la lame 38. Cette surface tronconique 82 se prolonge vers la lame 38 par une autre surface tronconique 84 elle-même se prolongeant par une paroi annulaire radiale 86. La paroi tronconique 82 de la paroi annulaire radialement externe 70 est moins évasée que l'autre paroi tronconique 84. Ces formes tronconiques permettent de faciliter la circulation des déchets dans l'espace entre la lame et la pièce annulaire..

La face annulaire latérale radialement externe 78A de la première gorge 68A se prolonge jusqu'à être agencée avec un jeu en vis-à-vis radial d'une première surface cylindrique 88 de l'élément de annulaire 58. De même, la face annulaire latérale radialement externe 78B de la seconde gorge 68B se prolonge jusqu'à être agencée avec un jeu en vis-à-vis radial d'une seconde surface cylindrique 90 de l'élément de annulaire 58. La première surface cylindrique 88 et la seconde surface cylindrique 90 sont reliées l'une à l'autre par une première surface annulaire radiale 92. L'extrémité de la seconde surface cylindrique 90 se prolonge, à son extrémité opposée à la première surface annulaire radiale 92, par une seconde surface annulaire radiale 94. Les jeux précités (non représentés) correspondent à des jeux nécessaires pour réaliser le montage de la pièce annulaire 50 sur l'élément annulaire 58 et garantir un bon appui des joints annulaires 96A, 96B sur les faces cylindriques radialement externes 78A, 78B des gorges annulaires 68A, 68B et les parois cylindriques 92, 94 de l'élément annulaire. Comme cela est visible sur la figure 5B, la surface cylindrique 88 délimite avec une surface annulaire radiale 97 de l'élément annulaire 58 un premier renfoncement annulaire dans lequel est engagée une extrémité de la paroi annulaire 70. La surface annulaire radiale 97 délimite une fente annulaire 101 avec une face annulaire radiale 99 de la paroi annulaire externe 70 qui est en vis-à-vis axial. Notons que la face annulaire radiale 99 et la face annulaire cylindrique 78A sont reliées l'une à l'autre. Egalement, la surface cylindrique 90 et la surface radiale 92 de l'élément annulaire 58 définissent ensemble un second renfoncement annulaire dans lequel s'étend la paroi annulaire intermédiaire 72 séparant la première gorge 68A et la seconde gorge 68B. Le premier renfoncement en L et le second renfoncement en L sont ainsi agencés l'un à la suite de l'autre en direction radiale et axiale de manière à former un agencement en marche d'escalier qui permet de limiter les introductions de déchets liquides. En effet, le second renfoncement annulaire est agencé radialement à l'intérieur du premier renfoncement annulaire et est agencé axialement à l'opposé de la paroi de fond par rapport au premier renfoncement annulaire.

En fonctionnement, les déchets s'introduisant dans la fente annulaire 101 sont empêchés de circuler vers les paliers 44 par la surface 88 de l'élément annulaire.

Plus précisément, l'étanchéité entre la pièce annulaire 50 et l'élément annulaire 58 est réalisée par un premier joint annulaire 96A engagé dans la première gorge annulaire 68A et par un second joint annulaire 96B engagé dans la seconde gorge annulaire 68B. Une cale annulaire 98A, 98B est montée dans chacune des première et seconde gorges annulaires 68A, 68B. Chaque cale annulaire 98A, 98B a une forme en L et comprend une première branche 100 et une seconde branche 102. La première branche 100 de chaque cale 98A, 98B est intercalée entre des moyens d'appui 104 élastique et le joint annulaire 96A, 96B. La seconde branche 102 de chaque cale 98A, 98B est intercalée entre la face annulaire latérale radialement interne 76A, 76B de chacune des première et seconde gorges annulaires 68A 68B.

Ainsi, les moyens d'appui élastiques permettent de contraindre élastiquement en direction axiale le premier joint 96A et le second joint 96B, respectivement, sur la première face annulaire radiale 92 et la seconde face annulaire radiale 94 de l'élément annulaire 58 pour garantir un bon contact lors de la rotation de la pièce annulaire 50. Les secondes branches 102 des cales 98A, 98B sont dimensionnées de manière à ce que la face annulaire radialement externe de chaque joint 96A, 96B soit en appui sur la face latérale radialement externe 78A, 78B de la gorge 68A, 68B.

Les moyens d'appui élastiques peuvent comprendre une lame élastiquement déformable, par exemple.

Afin de garantir une étanchéité en fonctionnement et également à l'arrêt de la rotation de l'arbre 42, il est intéressant de réaliser les joints 96A, 96B en plusieurs parties. Ainsi, chaque joint 96A, 96B peut comprendre une première partie annulaire 104 réalisée dans un premier matériau et une pluralité de secondes parties 106 formées par des joints toriques réalisés dans un second matériau différent du premier matériau. Ces joints toriques sont logés dans des rainures annulaires de la première partie 104 de chacun des premier et second joints 96A, 96B et sont destinés à venir, simultanément à la première partie, en contact avec les première et seconde faces annulaires radiales 92, 94 de l'élément annulaire 58 et avec les faces annulaires latérales radialement externe 78A, 78B des première et seconde gorges 68A, 68B.

La première partie 104 des premier et second joints 96A, 96B est de préférence réalisée en polymère durci et les secondes parties 106 sont réalisées en polymère.

Dans la réalisation représentée aux figures 5A, 5B et 5C, le premier et le second joints annulaires 96A, 96B ont une section rectangulaire, de préférence carrée.

Si l'invention décrite en référence aux figures présente l'élément annulaire statorique 58 ou statique comme une pièce indépendante de la paroi de fond 24, on comprend que l'élément annulaire pourrait être formé d'une seule pièce avec la paroi annulaire de fond 24 de sorte qu'aucun moyens annulaires d'étanchéité intercalés entre l'élément annulaire et la paroi annulaire ne seraient alors prévus.

Les figures 6 à 8 représentent une réalisation particulière d'un couvercle 108 pouvant être utilisé sur une cuve 12 telle que décrite ci-dessus mais également sur tout autre type de cuve.

Ainsi, le couvercle 108 comprend une paroi inférieure 110 circulaire destinée à venir en contact avec les déchets biologiques et une paroi supérieure 112 circulaire agencée à distance de la paroi inférieure 110.Pour limiter les fuites d'ondes, celles-ci sont piégées par des moyens tels que des pièges quart-d'onde, des pièges comportant des matériaux absorbants et/ou des joints formés de tresses métalliques. Un joint d'étanchéité 111 de blindage électromagnétique, en tresses métalliques, peut en outre être monté sur le bord périphérique interne du couvercle 108 et est destiné à être serré entre ce bord et le bord périphérique supérieur de la cuve en position de fermeture de celle-ci.

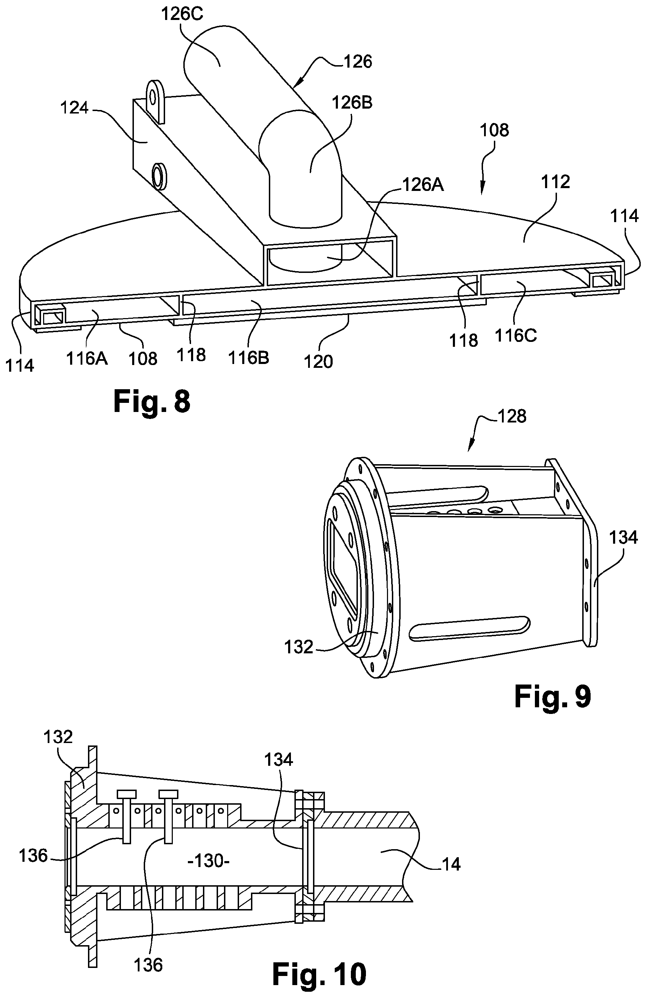

La paroi inférieure 110 et la paroi supérieure 112 sont reliées l'une à l'autre par un bord périphérique 114 externe et définissent entre elles trois cavités étanches 116A, 116B, 116C agencées côte à côte et délimitées par des entretoises ou cloisons de séparation 118 des parois inférieure 110 et supérieure 112. La paroi inférieure 110 comprend une ouverture centrale dont le pourtour porte une armature 120 réalisée en matériau métallique (figures 6 et 8). L'armature 120 comporte deux rangées annulaires radialement interne et externe d'ouvertures 122 logeant chacune une grille de blocage des déchets solides. Ces ouvertures 122 ont une forme de secteur angulaire et permettent de mettre en communication fluidique, en position de fermeture du couvercle 108, la cavité centrale 116B du couvercle 108 et l'intérieur de la cuve 12. La paroi supérieure 112 porte un bras 124 articulé en rotation pour le déplacement du couvercle 108. L'extrémité amont d'un conduit 126 traverse le bras 124 et débouche au travers de la paroi supérieure 112 dans la cavité centrale 116B du couvercle 108. Ainsi, les effluents gazeux peuvent être évacués dans le conduit 126.

Le conduit 126 qui est rigide peut être relié par un conduit souple à des moyens d'aspiration équipé d'un filtre, par exemple du type à charbon actif, destiné à retenir les molécules toxiques, nocives ou désagréables pour l'homme.

L'intégration de la sortie des effluents sur le couvercle 108 permet de réduire fortement le blocage de la sortie par rapport à un positionnement de la sortie sur la paroi cylindrique de la cuve 12.

Pour éviter les fuites d'ondes dans le conduit 126, ce dernier comprend des moyens de piégeage des ondes électromagnétiques. Pour cela, le conduit 126 comporte une portion d'extrémité 126A sensiblement cylindrique reliée à la cuve 12 et dont le diamètre interne et la longueur sont déterminées de manière à réaliser un piège du mode fondamental du générateur de micro-ondes. Cette portion d'extrémité proximale 126A est reliée à une portion distale 126C également cylindrique par une portion coudée 126B. La portion d'extrémité proximale 126A a un diamètre de 70 mm et une longueur de 140 mm pour réaliser un piège du mode fondamental transverse électrique 1,1 (TE11) à la fréquence de 2450 MHz. Bien évidemment, ces valeurs ne sont qu'illustratives du mode de réalisation particulier décrit.

Dans une autre réalisation, le magnétron 14 peut être monté directement sur la cuve 12, avec ou sans dispositif d'amortissement des vibrations. Dans cette configuration, le guide d'onde 128 de liaison du magnétron 14 à la cuve 12 est formé par un module tubulaire 128 ayant une forme sensiblement rectangulaire (figures 9 et 10). Chaque extrémité du conduit 130 du module 128 comprend une fenêtre 132, 134 ou hublot à travers duquel les micro-ondes sont destinées à passer. Le premier hublot 132 est destiné à être fixé dans une ouverture de la paroi latérale de la cuve 12. Ce premier hublot 132 est réalisé dans un matériau approprié transparent aux micro-ondes générées par le magnétron 14, qui est par exemple un matériau polymère diélectrique tel que du Téflon^{®}, PP, PEEK, etc. Le hublot 132 assure une protection mécanique du guide d'onde 128 lors de la phase de broyage. La seconde fenêtre ou hublot 134 peut avoir les mêmes caractéristiques techniques que le premier hublot 132 et permet de protéger le magnétron 14 d'une infiltration d'humidité au travers du premier hublot 132 qui pourrait provoquer un arc électrique qui endommagerait le magnétron 14.

Le module 128 peut comprendre des moyens d'adaptation d'impédance qui sont ici du type à éléments (vis, piston, tige, stubs, etc.) plongeants dans le conduit 130 du module 128. Chaque élément traversant 136 une paroi du conduit 130 et étant engagé ou enfoncé dans le conduit 130 de manière contrôlée de façon à ce que la partie enfoncée dans le conduit forme un obstacle aux ondes électromagnétiques passant à travers du conduit 130 et provoque ainsi des réflexions partielles des ondes électromagnétiques.

L'adaptateur d'impédance permet d'optimiser les paramètres de fonctionnement du magnétron 14, par le réglage optimal de la profondeur de pénétration des éléments plongeants 136 précités dans le conduit 130 du guide d'onde, ce qui permet de limiter notamment la réflexion des ondes électromagnétiques par les déchets. L'association de plusieurs de ces éléments réfléchissants 136 et de leur enfoncement dans le conduit 130 du guide d'onde permet donc d'adapter les impédances, vues par le magnétron, des charges constitutives du circuit complet (afin d'obtenir un rendement maximum d'absorption de l'énergie par les déchets dans la cuve).

## Revendications

1. Dispositif d'étanchéité, en particulier pour automate de traitement de déchets biologiques, comprenant une cuve (12) dont une paroi de fond (24) est traversée par un arbre (42) portant en rotation, à l'intérieur de la cuve (12) une pièce annulaire (50) comportant au moins une première gorge annulaire (68A) débouchant vers la paroi de fond (24) et logeant un premier joint annulaire (96A) en appui en direction axiale sur un élément annulaire solidaire (58) de la paroi de fond (24) et radialement vers l'extérieur sur une face annulaire latérale radialement externe (78A) de ladite gorge annulaire (68A), ledit dispositif d'étanchéité étant **caractérisé en ce que** des moyens d'appui élastiques (104) sont intercalés axialement entre une paroi annulaire de fond (BOA) de ladite gorge annulaire (68A) et ledit joint annulaire (96A).

2. Dispositif selon la revendication 1, dans lequel une cale annulaire (98A) est intercalée axialement entre les moyens d'appui élastique (104) et le joint annulaire (96A).

3. Dispositif selon la revendication 2, dans lequel la cale annulaire (98A) a une section en L dont une branche (102) est intercalée entre une face latérale annulaire radialement interne (76A) de ladite gorge annulaire (68A) et ledit joint annulaire (96A).

4. Dispositif selon l'une des revendications 1 à 3, dans lequel la face annulaire radialement externe (78A) de la première gorge (68A) se prolonge axialement vers la paroi de fond (24) jusqu'à être agencée en vis-à-vis radial d'une première surface cylindrique (88) de l'élément annulaire (58).

5. Dispositif selon l'une des revendications précédentes, dans lequel ladite pièce annulaire (50) comprend une seconde gorge annulaire (68B) formée radialement à l'intérieur de ladite première gorge annulaire (68A) et logeant un second joint annulaire (96B) en appui en direction axiale sur l'élément annulaire solidaire (58) de la paroi de fond (24) et radialement vers l'extérieur sur une face annulaire latérale radialement externe (78B) de ladite seconde gorge annulaire (68B).

6. Dispositif selon la revendication 5, dans lequel la face annulaire latérale radialement externe (78B) de la seconde gorge (68B) se prolonge
axialement vers la paroi de fond (24) jusqu'à être agencée en vis-à-vis radial d'une seconde surface cylindrique (90) de l'élément annulaire (58).

7. Dispositif selon la revendication 4 et la revendication 6, dans lequel la première surface cylindrique (88) et la seconde surface cylindrique (90) de l'élément annulaire (58) sont reliées l'une à l'autre par une surface annulaire radiale (92) d'appui du premier joint annulaire (96A).

8. Dispositif selon l'une des revendications 1 à 7, dans lequel ledit premier joint annulaire (96A) comprend une première partie annulaire (104) réalisée dans un premier matériau et une pluralité de secondes parties (106) formées par des joints toriques logés dans des rainures de la première partie, le premier matériau étant adapté à réaliser une étanchéité dynamique entre l'élément annulaire et le premier joint annulaire et le second matériau étant adapté à réaliser une étanchéité statique entre l'élément annulaire et le premier joint annulaire.

9. Dispositif selon l'une des revendications précédentes, dans lequel la ou les gorges annulaires (68A, 68B) sont à section en U comprenant des faces latérales (76A, 78A, 76B, 78B) sensiblement cylindriques et perpendiculaires à une face annulaire de fond (80A, 808) sensiblement radiale, le joint (96A, 96B) étant à section rectangulaire.

10. Dispositif selon l'une des revendications précédentes, dans lequel ledit joint annulaire (96A, 96B) est réalisé dans un matériau polymère durci.

11. Dispositif selon l'une des revendications précédentes, dans lequel l'élément annulaire (58) est indépendant de la paroi de fond (24) et est appliqué à étanchéité sur la face interne de la paroi de fond (24).

12. Dispositif selon l'une des revendications précédentes, **caractérisé en ce qu'**il comprend des moyens de broyage des déchets (38) portés par l'arbre et montés à l'opposé de la paroi de fond (24) par rapport à la pièce annulaire (50).

13. Automate de traitement de déchets, en particulier de banalisation de déchets d'activités de soins à risques infectieux, **caractérisé en ce qu'**il comprend au moins un dispositif d'étanchéité selon l'une des revendications précédentes.

## Patentansprüche

1. Dichtungsvorrichtung, insbesondere für eine Maschine zur Verarbeitung von biologischen Abfällen, umfassend einen Tank (12), dessen Bodenwand (24) von einer Welle (42) durchquert wird, die im Inneren des Tanks (12) ein ringförmiges Stück (50) drehbar trägt, das mindestens eine erste ringförmige Nut (68A) umfasst, die zur Bodenwand (24) hin mündet und eine erste ringförmige Dichtung (96A) aufnimmt, die in axialer Richtung auf einem ringförmigen Element (58), das fest mit der Bodenwand (24) verbunden ist, und radial nach außen auf einer radial äußeren ringförmigen Seitenfläche (78A) der ringförmigen Nut (68A) aufliegt, wobei die Dichtungsvorrichtung **dadurch gekennzeichnet ist, dass** elastische Auflagemittel (104) axial zwischen einer ringförmigen Bodenwand (BOA) der ringförmigen Nut (68A) und der ringförmigen Dichtung (96A) eingefügt sind.

2. Vorrichtung nach Anspruch 1, wobei ein ringförmiger Keil (98A) axial zwischen den elastischen Auflagemitteln (104) und der ringförmigen Dichtung (96A) eingefügt ist.

3. Vorrichtung nach Anspruch 2, wobei der ringförmige Keil (98A) einen L-Abschnitt aufweist, dessen Schenkel (102) zwischen einer radial innenliegenden ringförmigen Seitenfläche (76A) der ringförmigen Nut (68A) und der ringförmigen Dichtung (96A) eingefügt ist.

4. Vorrichtung nach einem der Ansprüche 1 bis 3, wobei sich die radial äußere ringförmige Fläche (78A) der ersten Nut (68A) axial zur Bodenwand (24) erstreckt, bis sie radial gegenüber einer ersten zylindrischen Oberfläche (88) des ringförmigen Elements (58) angeordnet ist.

5. Vorrichtung nach einem der vorhergehenden Ansprüche, wobei das ringförmige Stück (50) eine zweite ringförmige Nut (68B) umfasst, die radial innerhalb der ersten ringförmigen Nut (68A) ausgebildet ist und eine zweite ringförmige Dichtung (96B) aufnimmt, die in axialer Richtung auf dem ringförmigen Element (58), das fest mit der Bodenwand (24) verbunden ist, und radial nach außen auf einer radial äußeren ringförmigen Seitenfläche (78B) der zweiten ringförmigen Nut (68B) aufliegt.

6. Vorrichtung nach Anspruch 5, wobei sich die radial äußere ringförmige Seitenfläche (78B) der zweiten Nut (68B) axial zur Bodenwand (24) hin erstreckt, bis sie radial gegenüber einer zweiten zylindrischen Oberfläche (90) des ringförmigen Elements (58) angeordnet ist.

7. Vorrichtung nach Anspruch 4 und 6, wobei die erste zylindrische Oberfläche (88) und die zweite zylindrische Oberfläche (90) des ringförmigen Elements (58) durch eine radiale ringförmige Oberfläche (92) zur Auflage der ersten ringförmigen Dichtung (96A) miteinander verbunden sind.

8. Vorrichtung nach einem der Ansprüche 1 bis 7, wobei die erste ringförmige Dichtung (96A) einen ersten ringförmigen Teil (104), der aus einem ersten Material hergestellt ist, und eine Vielzahl von zweiten Teilen (106) umfasst, die durch O-Ringe gebildet sind, die in Rillen des ersten Teils untergebracht sind, wobei das erste Material geeignet ist, eine dynamische Abdichtung zwischen dem ringförmigen Element und der ersten ringförmigen Dichtung herzustellen, und das zweite Material geeignet ist, eine statische Abdichtung zwischen dem ringförmigen Element und der ersten ringförmigen Dichtung herzustellen.

9. Vorrichtung nach einem der vorhergehenden Ansprüche, wobei die ringförmige Nut bzw. die ringförmigen Nuten (68A, 68B) U-förmig sind und Seitenflächen (76A, 78A, 76B, 78B) umfassen, die im Wesentlichen zylindrisch und senkrecht zu einer im Wesentlichen radialen ringförmigen Bodenfläche (80A, 808) verlaufen, wobei die Dichtung (96A, 96B) einen rechteckigen Querschnitt aufweist.

10. Vorrichtung nach einem der vorhergehenden Ansprüche, wobei die ringförmige Dichtung (96A, 96B) aus einem ausgehärteten Polymermaterial hergestellt ist.

11. Vorrichtung nach einem der vorhergehenden Ansprüche, wobei das ringförmige Element (58) von der Bodenwand (24) unabhängig ist und abdichtend auf die Innenfläche der Bodenwand (24) aufgebracht ist.

12. Vorrichtung nach einem der vorhergehenden Ansprüche, **dadurch gekennzeichnet, dass** sie Abfallzerkleinerungsmittel (38) umfasst, die von der Welle getragen und in Bezug auf das ringförmige Stück (50) gegenüber der Bodenwand (24) montiert sind.

13. Maschine zur Verarbeitung von Abfällen, insbesondere zur Sicherstellung von Abfällen von infektiösen Pflegetätigkeiten, **dadurch gekennzeichnet, dass** er mindestens eine Dichtungsvorrichtung nach einem der vorhergehenden Ansprüche umfasst.

## Claims

1. Sealing device, in particular for a biological waste treatment automaton, comprising a tank (12) the bottom wall (24) of which is traversed by a shaft (42) bearing in rotation, inside the tank (12), an annular part (50) comprising at least one first annular groove (68A) opening towards the bottom wall (24) and housing a first annular seal (96A) bearing in an axial direction on an annular element (58) secured to the bottom wall (24) and radially outwards on a radially outer lateral annular face (78A) of said annular groove (68A), said sealing device being **characterised in that** elastic bearing means (104) are axially interposed between a bottom annular wall (BOA) of said annular groove (68A) and said annular seal (96A).

2. Device according to claim 1, wherein an annular shim (98A) is axially interposed between the elastic bearing means (104) and the annular seal (96A).

3. Device according to claim 2, wherein the annular shim (98A) has an L-shaped cross-section a branch (102) of which is interposed between a radially inner annular side face (76A) of said annular groove (68A) and said annular seal (96A).

4. Device according to one of claims 1 to 3, wherein the radially outer annular face (78A) of the first groove (68A) extends axially towards the bottom wall (24) until it is arranged radially opposite a first cylindrical surface (88) of the annular element (58).

5. Device according to one of the preceding claims, wherein said annular part (50) comprises a second annular groove (68B) formed radially inside said first annular groove (68A) and housing a second annular seal (96B) bearing in an axial direction on the annular element (58) secured to the bottom wall (24) and radially outwards on a radially outer lateral annular face (78B) of said second annular groove (68B).

6. Device according to claim 5, wherein the radially outer lateral annular face (78B) of the second groove (68B) extends
axially towards the bottom wall (24) until it is arranged radially opposite a second cylindrical surface (90) of the annular element (58).

7. Device according to claim 4 and claim 6, wherein the first cylindrical surface (88) and the second cylindrical surface (90) of the annular element (58) are connected to each other by a radial annular surface (92) supporting the first annular seal (96A).

8. Device according to one of claims 1 to 7, wherein said first annular seal (96A) comprises a first annular part (104) made from a first material and a plurality of second parts (106) formed by O-ring seals housed in recesses of the first part, the first material being adapted for producing a dynamic seal between the annular element and the first annular seal and the second material being adapted for producing a static seal between the annular element and the first annular seal.

9. Device according to any one of the preceding claims, wherein the annular groove(s) (68A, 68B) have a U-shaped cross-section comprising side faces (76A, 78A, 76B, 78B) substantially cylindrical and perpendicular to a substantially radial annular bottom face (80A, 808), the seal (96A, 96B) being rectangular in cross-section.

10. Device according to one of the preceding claims, wherein said annular seal (96A, 96B) is made from a cured polymer material.

11. Device according to one of the preceding claims, wherein the annular element (58) is independent of the bottom wall (24) and is applied sealingly on the inner face of the bottom wall (24).

12. Device according to one of the preceding claims, **characterised in that** it comprises waste-grinding means (38) carried by the shaft and mounted opposite the bottom wall (24) with respect to the annular part (50).

13. A waste treatment automaton, in particular for processing waste from care activities with infectious risks, **characterised in that** it comprises at least one sealing device according to one of the preceding claims.
